# EUROPEAN PATENT APPLICATION

(11) **EP 1 770 914 A1**
(43) Date of publication of application: **04.04.2007**
(21) Application number: 05021314.9
(22) Date of filing: 29.09.2005
(51) Int. Cl.: H04L 12/56

(54) **Method and apparatus for handling a HSDPA handover within a mobile communications network**

(71) Applicant: SIEMENS AKTIENGESELLSCHAFT, 80333 München (DE)
(72) Inventor: Gartner, Beate, 2542 Kottingbrunn (AT); Stadler, Thomas, 1130 Wien (AT); Unteregger, Burghard, 1040 Wien (AT)

(57) **Abstract**

The invention relates to a method and an apparatus for handling a handover of a transmission connection between a user equipment and a network node serving cells within a mobile communications network. An aspect of the invention is a method for handling a handover of a transmission connection between a user equipment and a network node serving cells within a mobile communications network, whose serving cells serving the user equipment provide control information on shared control channels, whereby during the handover a limited amount of shared control channels are monitored by the user equipment. Hereby a first part of the amount of shared control channels is associated with a first serving cell and a second part of said amount of shared channels is associated with a second serving cell, over that the transmission connection should be handed. In particular corresponding reordering of priority queues (Prio 1, Prio 2) in the network node (Node B 2) with respect to the transmission connection are maintained by the user equipment.

A further aspect of the invention is an apparatus comprising means for performing the above mentioned method.

## Description

Method and apparatus for handling a handover within a mobile communications network

The invention relates to a method and an apparatus for handling a handover of a transmission connection between a user equipment and a network node serving cells within a mobile communications network.

### BACKROUND OF INVENTION

The presented invention is particularly used in the mobile radio communications field, preferably using UMTS technology.

Originally HSDPA in UMTS Rel-5 was designed for packet traffic regarding Quality of Service (QoS) classes Streaming, Interactive and Background only. However recent development of deploying HSDPA also requires to take conversational service classes (e.g. VoIP, Gaming) into consideration.

The most problematic HSDPA topic regarding conversational service classes is the so-called handover mechanism (HO).

In the following a handover mechanism with respect to HSDPA channels is explained: The cell which is serving a UE is called serving cell for this particular UE. The serving cell provides control information on shared control channels (HS-SCCHs) and sends data packets on a shared data channel (HS-DSCH) for this UE.

In Rel-5 Handover of HSDPA channels means Hard Handover, i.e. switching the serving cell by releasing and establishing downlink channels. All HSDPA related DL channels (HS-SCCH and HS-DSCH) are switched from the previous serving cell to the succeeding serving cell. They can be switched between cells of the same Node B (Intra Node B HO) or switched between cells of different Node Bs (Inter Node B HO). There is no direct connection between Node Bs, however a scheduler within a Node B might handle all cells in an entity.

Different traffic classes are handled by using MAC-d flows of different priorities on traffic packets, indicating in which manner packets should be handled by the scheduler. Signalling and conversational service will be of the highest, while streaming, I/B service will be of any lower or of the lowest priority. Packets of same priorities of a UE will be stored in priority queues together with packets of same priority of other UEs. A method of passing the packets through the queue, is "first in first out" in the case the scheduler regards it as appropriate that packets of this particular priority should be scheduled. Usually the priority scheme shall be kept as QoS principles are based on it.

Priority handling highly influences the delay of a packet. Conversational service requires very low delays in comparison with signalling. Therefore priority queues of this service type are kept short containing only a few packets whereas queues for another service type may be longer, allowing more packets for a particular UE to be stored and thus providing more flexibility to the scheduler in order to optimally utilize variant radio conditions. But on the other hand this longer duration of storage is causing a longer path for packets on their way from their entry until being scheduled.

There are two main problems for HSDPA HO when dealing with conversational traffic.
1. The switching as designed for Rel-5 is a rather time consuming process. Due to delay and packet loss rate it is less suitable for conversational services.
2. In case of Inter Node B Handover and in case of mixed traffic (VoIP, streaming, I/B) which is rather likely and a key feature of UMTS there is a different amount of packets in each priority queue. If the serving cell HO is finished with respect to the highest priority as required by VoIP, all packets in the lower priority queues of the previous Node B are lost.

Referring to the above mentioned bullet point 1 an approach is considerable which provides a kind of virtual active set regarding the HSDPA control channels. A UE being handed over listens to several HS-SCCHS from the previous cell and the succeeding cell during a limited time. As soon as data are sent via the succeeding HS-SCCHs, the UE switches to the succeeding cell. After a short time period the HS-SCCHs are reconfigured by OSI-Layer 3 and used by the succeeding serving cell only and the normal HSDPA operation is resumed.

Referring to the above mentioned bullet point 2 there is no approach up to now. Packets waiting in priority queues in the previous Node B are ignored by the UE. If sent or as soon as it listens to the succeeding cell packets are discarded as soon as HO is completed by Layer 3. Packets from AM RLC or TCP/IP are retransmitted by higher layers. Other packets are lost (e.g. UM RLC, UDP streaming) thus adding up to the frame dropping rate.

### SUMMARY OF INVENTION

The present invention aims to overcome the above mentioned problems.

Said problem is solved by the features mentioned in the independent claims. Preferred embodiments of the invention are described in the dependent claims.

An aspect of the invention is a method for handling a handover of a transmission connection between a user equipment and a network node serving cells within a mobile communications network, whose serving cells serving the user equipment provide control information on shared control channels, whereby during the handover a limited amount of shared control channels are monitored by the user equipment.

Hereby a first part of the amount of shared control channels is associated with a first serving cell and a second part of said amount of shared channels is associated with a second serving cell, over that the transmission connection should be handed. In particular corresponding reordering of priority queues in the network node with respect to the transmission connection are maintained by the user equipment.

A further aspect of the invention is an apparatus comprising means for performing the above mentioned method.

As mentioned above the UE is monitoring the HS-SCCHs of the serving cell to get information about the HS-DSCH. In order to reduce the number of HS-SCCHs it is sufficient that the UE monitors only up to four HS-SCCHs. Between the Handover procedure these four HS-SCCHs are configured for the serving network node Node B only. During a Handover procedure up to two HS-SCCHs are configured for the source Node B and two HS-SCCHs for the target Node B.

The Handover request can be initiated by the UE, or by the Node B after evaluating measurements or by the RNC based on measurement reports from UE to RNC. In each case only the candidate cell is out of the active set.

The final decision whether a Handover is acceptable or not is done by the RNC. When the RNC starts a Handover, it configures the HS-SCCHs for the concerned UE: up to two HS-SCCHs for the source Node B, up to two HS-SCCHs for the target Node B. This configuration was already preconfigured and can be activated by the RNC using a short message. The duration needed for the activation takes nearly the same time as the duration needed to fill the target Node B with the new packets. After the Handover, that means at the time when the UE decodes all packets of the succeeding cell successfully, the RNC will change the HS-SCCH configuration again. Then the UE monitors all four HS-SCCHs from the target Node B.

It should be mentioned in advance, that corresponding to priorities queues in the node B the UE maintains reordering queues, where the incoming packets for MAC-d flows of certain priorities are put for reordering and forwarded to higher layers afterwards.

### Advantages of the invention:

While UE is listening to the control channels of the previous and succeeding cell, the previous and succeeding cell can empty its buffers and higher layer retransmissions or packet loss are avoided. Besides there is no delay added to the VoIP traffic.

In an equally loaded system, the packets arriving in the queues of the succeeding Node B will be queued at the end of the line propagating forward as in the previous cell the remaining packets are scheduled for transmission.

Less higher layer retransmissions are required.

### BRIEF DESCRIPTION OF THE DRAWINGS

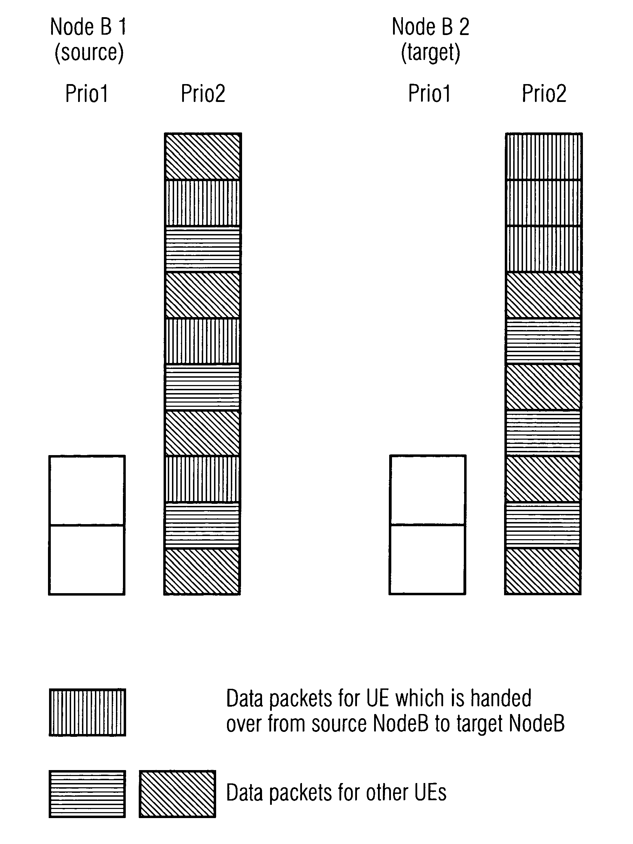

Preferred embodiments of the present invention will now be described with reference to the accompanying drawing in which:

The figure illustrates priority queues of network nodes belonging either to the previous or the succeeding serving cells.

### DETAILLED DESCRIPTION OF THE DRAWINGS

The figure shows a source network nodes Node B 1 and a target network node Node B 2 both comprising 2 priority queues Prio 1 and Prio 2 which contain data packets for a UE which is handed over from Node B 1 to Node B 2.

The following solution describes a MAC-d flow specific Handover procedure which comprises the steps described below as long as the UE listens to the HS-SCCHs of the previous and the succeeding serving cell:
(a) Firstly in each TTI the UE decodes the HS-SCCHs of the succeeding cell.
   (a.1) In the case that a packet has been decoded correctly on the succeeding cell
      (a.1.a) if it belongs to a MAC-d flow not yet handed over, consider this MAC-d flow as handed over from now on, flush the corresponding reordering queue and put the packet into this queue.
      (a.1.b) if the MAC-d flow has been already handed over resume normal reordering operation with this packet.
   (a.2) In the case that nothing has been found on it, the UE looks at the HS-SCCHs of the previous cell
      (a.2.a) if the decoded packet belongs to a MAC-d flow not yet handed over, forward it for reordering.
      (a.2.b) else ignore it - as it does not fit into the queue anymore since the succeeding Node B uses new Transmission Sequence Number (TSN) scheme. This may corrupt reordering and also cause crypto desynchronisation.
         Figure illustrates the queues in the source and the target network node Node B during Handover.
(b) As soon as all configured MAC-d flows have been handed over, just listen to the succeeding cell from now on.
(c) In order to prevent the previous and succeeding cell from using the same HARQ process numbers, Layer3 may configure simple schemes for exclusive use during handover, for example the previous cell uses a certain sequence of numbers, e.g. odd numbers, the succeeding one uses a different sequence of numbers, e.g. even numbers only.
d) A configuration scheme is need to differentiate between the previous and the suceeding Node B in order to avoid transmission to the UE from both Node Bs at the same time.
   In order to avoid use of overlapping TTIs in the previous and the succeeding cell, Layer3 may configure simple schemes for exclusive use, e.g. even/odd scheme or first half, last half of a frame. Since the previous cell also receives all ACKs from the UE, as well as those sent to the succeeding cell, it may adapt its timing to optimize scheduling of its own packets.
   UEs which are capable of performing receptions from both cells in parallel can perform step (a.2) even if something is found in step (a.1). It would be advantageous, if UTRAN is informed about such a capability, because of higher scheduling flexibility i.e.(c) and (d) would not be needed for such UEs.
(e) The succeeding cell could analyze the ACKs from the UE regarding the previous cell and delay traffic of lower priority.
(f) If the previous cell knows, that a HO for a UE is pending, it could schedule the packets for this UE faster.
(g) The handover of a transmission connection could be subdivided into several handover steps, whereby each handover step can be handled as described above. That means that corresponding MAC-d flows can be handed over separated in a sequence.

Abbreviations:
ACKs Acknowlegdement
DL Down Link
HO Handover
HSDPA High Speed Downlink Packet Access
HS-DSCH High Speed Downlink Shared Channel
HS-SCCH High Speed Shared Control Channel
MAC Medium Access Control
QoS Quality of Service
RNC Radio Network Controller
TTI Transmission Time Interval
UE User Equipment
UMTS Universal Mobile Telecommunications System
UTRAN UMTS Terrestrial Radio Access Network

## Claims

1. A method for handling a handover of a transmission connection between a user equipment and a network node serving cells within a mobile communications network, whose serving cells serving the user equipment provide control information on shared control channels, whereby during the handover a limited amount of shared control channels are monitored by the user equipment, whereby a first part of the amount of shared control channels is associated with a first serving cell and a second part of said amount of shared channels is associated with a second serving cell, over that the transmission connection should be handed, **characterized in that** corresponding reordering of priority queues (Prio 1, Prio 2) in the network node (Node B 2) with respect to the transmission connection are maintained by the user equipment.

2. A method as claimed in claim 1, wherein the method can be activated by the network node using a short message.

3. A method as claimed in any preceding claims, wherein a configuration scheme for associating control information of said shared control channels is employed in such way so that the user equipment only receives transmission information from any one of the network nodes.

4. A method as claimed in claim 3, wherein a configuration scheme for associating control information of said shared control channels is employed by using a certain sequence of process numbers for said channels associated with the first serving cell and a different sequence of process numbers for said channels associated with the second serving cell.

5. A method as claimed in claim 3, wherein a configuration scheme for associating control information of said shared control channels is employed by using different timing for the control information for said channels associated with the first serving cell and said channels associated with the second serving cell.

6. A method as claimed in any preceding claims, wherein the user equipment receives information on said shared channel of one or more priority reordering queues from the first serving cell and information for other priority reordering queues from the second serving cell or vice versa.

7. A method as claimed in any preceding claims wherein the user equipment stops receiving information for a particular priority queue from the first cell, as soon as it receives information for this priority reordering queue from the second cell.

8. A method as claimed in claim 7, wherein the user equipment continues to receive information for other priority reordering queues from the first cell.

9. A method as claimed in any preceding claims, wherein the user equipment indicates capability of receiving information on shared channels from more than one serving cell in parallel.

10. A method as claimed in any preceding claims, wherein the handover of a transmission connection is subdivided into several handover steps, whereby each handover step can be handled as claimed in any preceding claims.

11. A method as claimed in claim 10, wherein each handover step is associated with a Mac-d flow.

12. Network node (Node B 2) for handling a handover of a transmission connection between a user equipment and a network node serving cells within a mobile communications network, whose serving cells serving the user equipment provide control information on shared control channels, comprising means for associating a first part of an amount of shared control channels with a first serving cell and a second part of said shared channels with a second serving cell, over that the transmission connection can be handed, and means for corresponding reordering of priority queues (Prio 1, Prio 2) in the network node that can be maintained by the user equipment.

13. User equipment for handling a handover of a transmission connection according to any of the preceding claims, wherein the user equipment comprises means for indicating capability of receiving information on shared channels from more than one serving cell in parallel.
